# EUROPEAN PATENT APPLICATION

(11) **EP 3 184 571 A1**
(43) Date of publication of application: **28.06.2017**
(21) Application number: 16203568.7
(22) Date of filing: 12.12.2016
(51) Int. Cl.: C08G 61/02, C08G 61/12, C09D 165/00

(54) **ARYLCYCLOBUTENES**

(30) Priority: 21.12.2015 US 201562270069 P
(71) Applicant: Rohm and Haas Electronic Materials LLC, Marlborough, MA 01752 (US); Dow Global Technologies LLC, Midland, MI 48674 (US)
(72) Inventor: ROMER, Duane R., Midland, MI 48674 (US); GALLAGHER, Michael K., Marlborough, MA 01752 (US); BAI, Zhifeng, Midland, MI 48674 (US); RIENER, Michelle, Marlborough, MA 01752 (US)
(74) Representative: Houghton, Mark Phillip

(57) **Abstract**

Arylcyclobutene polymers having improved physical properties, such as elongation, are provided. Compositions and methods for coating such arylcyclobutene polymers are also provided.

## Description

The present invention relates generally to the field of polymer materials, and more particularly to arylcyclobutene-based polymers useful in the manufacture of electronic devices.

Arylcyclobutene-based polymers are used as dielectric materials in a variety of electronic applications, such as microelectronic packaging and interconnect applications. Arylcyclobutene-based polymers possess many desirable properties for these applications. However, these polymers do suffer from certain mechanical limitations, such as low fracture toughness, low elongation and poor tensile strength, which limits the use of these polymers in certain electronic applications.

One approach to improving the mechanical properties of arylcyclobutene-based polymers is disclosed in U.S. Pat. No. 6,420,093. This patent discloses compositions providing benzocyclobutene-based polymers having improved toughness, the compositions comprising a) at least one precursor compound selected from arylcyclobutene monomers, arylcyclobutene oligomers, and combinations thereof; and b) a polymer or oligomer having a backbone comprising ethylenic unsaturation (that is, carbon-carbon double bond(s)) and terminal acrylate or methacrylate groups. The toughening additives disclosed in this patent have a significant amount of carbon-carbon double bonds in the polymer backbone. However, when these compositions are used in certain photopatterning applications, the improved elongation toughness of the benzocyclobutene polymers is lost due to competing reactions involving the carbon-carbon double bonds of the added polymer or oligomer. In addition, residual carbon-carbon double bonds in the added polymer backbone may lead to yellowing of the material over time, which may be detrimental for certain applications. Accordingly, there remains a need for alternative materials that can provide arylcyclobutene-based materials having improved mechanical properties.

Published European Patent Application EP527272 A1 discloses a benzocyclobutene (BCB) resin having improved properties, such as improved flexibility, strength and anti-cracking properties. The BCB resin in this patent application is prepared by reacting a bis-benzocyclobutene (bis-BCB) monomer with an unsaturated compound (dienophile monomer) having a higher dienophile activity than the unsaturation in the bis-BCB monomer. The dienophile monomers have a single site of ethylenic or acetylenic unsaturation. One such dienophile monomer is maleic anhydride. The dienophile monomers are used in a relatively lower amount relative to the bis-BCB monomer (0.001 to 0.2 mol/mol bis-BCB) and function to control the degree of polymerization of the bis-BCB monomer. Basically, the dienophile monomer, with its single dienophile moiety, functions to terminate a growing polymer chain, thereby reducing the molecular weight of the polymer chain. While certain properties of these polymers may be improved, other properties may suffer from this approach, such as having a lowered chemical resistance as compared to conventional BCB resins. In particular, when these conventional polymers are used in a photodielectric material, the lower molecular weight polymer will reduce the contrast (or dissolution rate difference) between exposed and unexposed regions, resulting in poor resolution and a relatively large film thickness loss in unexposed regions.

Japanese published patent application JP2004224817 discloses a resin composition containing a benzocyclobutene resin and certain allyl-substituted bismaleimide derivatives for use in prepreg materials. The bismaleimide derivatives are a Diels-Alder reaction product of a bis-maleimide compound with 2 moles of allyl-substituted cyclopentadiene, where the cyclopentadiene reacts with the carbon-carbon double bond in the maleimide moiety. Upon exposure to relatively high temperatures, such as those typically encountered during various semiconductor processing and packaging operations, the resins disclosed in this Japanese publication are subject to undergoing a retro-Diels-Alder reaction which results in cleavage of the resin.

The present invention provides a polymer comprising as polymerized units one or more arylcyclobutene first monomers and one or more second monomers having two or more allyl moieties; wherein the one or more second monomers are free of arylcyclobutene moieties; and wherein the one or more second monomers are not allyl-substituted bismaleimide derivatives. Preferably, the second monomers are free of bismaleimide moieties, and more preferably, the second monomers are free of bismaleimide derivatives formed from allyl-substituted cyclopentadiene derivatives and bismaleimide compounds.

Also provided by the present invention is a composition comprising the polymer described above and one or more organic solvents.

The present invention further provides a method of forming the polymer described above comprising polymerizing the one or more arylcyclobutene first monomers and the one or more second monomers having two or more allyl moieties.

Still further, the present invention further provides a method of forming a film on a substrate comprising: providing a substrate; coating a layer of a composition described above on a surface of the substrate; and curing the coating.

Additionally provided by the present invention is a substrate comprising a cured film formed from the composition described above.

As used throughout this specification, the following abbreviations shall have the following meanings, unless the context clearly indicates otherwise: °C = degree Celsius; min. = minutes; hr. = hours; g = gram; L = liter; µm = micron = micrometer; nm = nanometer; mm = millimeter; mL = milliliter; MPa = megapascal; M_{w} = weight average molecular weight; Mₙ = number average molecular weight; and AMU = atomic mass unit. Unless otherwise noted, "wt%" refers to percent by weight, based on the total weight of a referenced composition.

The term "alkyl" includes linear, branched and cyclic alkyl. Likewise, "alkenyl" refers to linear, branched and cyclic alkenyl. The term "alkynyl" refers to linear or branched alkynyl. "Aryl" refers to aromatic carbocycles and aromatic heterocycles. As used herein, the term "aliphatic" refers to an open-chain carbon-containing moiety, such as alkyl, alkenyl and alkynyl moieties, which may be linear or branched. Also as used herein, the term "alicyclic" refers to a cyclic aliphatic moiety, such as cycloalkyl and cycloalkenyl. Such alicyclic moieties are non-aromatic, but may include one or more carbon-carbon double bonds. Unless the context clearly indicates otherwise, by "substituted" alkyl, alkenyl, or alkynyl is meant that one or more hydrogens on the alkyl, alkenyl, or alkynyl is replaced with one or more substituents chosen from halo, hydroxy, C₁₋₁₀ alkoxy, amino, mono- or di-C₁₋₁₀ hydrocarbyl substituted amino, C₅₋₂₀ aryl, and substituted C₅₋₂₀ aryl. Unless the context clearly indicates otherwise, by "substituted" aryl is meant that one or more hydrogens on the aryl is replaced by one or more substituents chosen from halo, hydroxy, C₁₋₁₀ alkyl, C₂₋₁₀ alkenyl, C₂₋₁₀ alkynyl, C₁₋₁₀ alkoxy, amino, mono- or di-C₁₋₁₀ hydrocarbyl substituted amino, C₅₋₂₀ aryl, and substituted C₅₋₂₀ aryl. "Alkyl" refers to an alkane radical, and includes alkane diradicals (alkylene) and higher-radicals. Likewise, the terms "alkenyl", "alkynyl" and "aryl" refer to the corresponding mono-, di- or higher-radicals of an alkene, alkyne and arene, respectively. "Halo" refers to fluoro, chloro, bromo, and iodo. The term "(meth)acrylate" refers to both methacrylate and acrylate, and likewise the term (meth)acrylamide refers to both methacrylamide and acrylamide.

By the term "curing" is meant any process, such as polymerization or condensation, that increases the molecular weight of a material or composition. "Curable" refers to any material capable of being cured under certain conditions. The term "polymer" also includes oligomers. The term "oligomer" refers to relatively low molecular weight materials such as dimers, trimers, tetramers, pentamers, hexamers, and the like, including B-staged material, that are capable of further curing. As used herein, "aromatic organic residue" embraces an organic residue that has only aromatic character, such as phenyl, as well as an organic residue that contains a combination of aromatic and aliphatic moieties. The articles "a", "an" and "the" refer to the singular and the plural. All amounts are percent by weight and all ratios are molar ratios, unless otherwise noted. All numerical ranges are inclusive of the endpoints and combinable in any order, except where it is clear that such numerical ranges are constrained to add up to 100%.

The present invention provides certain arylcyclobutene polymers comprising as polymerized units one or more first arylcyclobutene monomers and one or more second monomers, the second monomers having two or more allyl moieties. Such arylcyclobutene polymers have improved tensile strength and/or elongation as compared to conventional arylcyclobutene-based polymers. Preferably, the present arylcyclobutene polymers are oligomeric. More preferably, the one or more second monomers are free of benzocyclobutene moieties, and even more preferably free of arylcyclobutene moieties.

Arylcyclobutene first monomers useful in preparing the present arylcyclobutene polymers include, but are not limited to, those having formula (1): 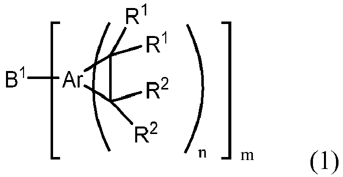 wherein B¹ is an n-valent linking group; Ar is a polyvalent aryl group and the carbon atoms of the cyclobutene ring are bonded to adjacent carbon atoms on the same aromatic ring of Ar; m is an integer of 1 or more; n is an integer of 1 or more; and each of R¹ and R² is independently a monovalent group; wherein the two R¹ moieties may be taken together along with the carbon to which they are attached to form a carbonyl or thiocarbonyl; and wherein the two R² moieties may be taken together along with the carbon to which they are attached to form a carbonyl or thiocarbonyl. Preferably, the polyvalent aryl group, Ar, may be composed of 1 to 3 aromatic carbocyclic or heteroaromatic rings. It is preferred that Ar comprises a single aromatic ring, and more preferably a phenyl ring. When Ar is a phenyl ring, the monomer is a benzocyclobutene (BCB) monomer. Ar is optionally substituted with 1 to 3 groups chosen from C₁₋₆ alkyl, tri-C₁₋₆-alkylsilyl, C₁₋₆ alkoxy, halo, and carboxyl, preferably with one or more of C₁₋₆ alkyl, tri-C₁₋₃-alkylsilyl, C₁₋₃ alkoxy, chloro, and carboxyl, and more preferably with one or more of C₁₋₃ alkyl, tri-C₁₋₃-alkylsilyl, C₁₋₃ alkoxy, and carboxyl. It is preferred that Ar is unsubstituted or substituted with carboxyl. It is preferred that n = 1 or 2, and more preferably n = 1. It is preferred that m = 1-4, more preferably m = 2-4, and yet more preferably m = 2. Preferably, each R¹ and R² is independently chosen from H, C₁₋₆ alkyl, C₁₋₆ alkenyl, C₁₋₆ alkoxy, carboxy, C₂₋₆ carboxy-containing moiety, C₂₋₆ keto-containing moiety, C₁₋₆ amido-containing moiety, C₂₋₆ alkoxyalkanol, C₂₋₆ alkoxyester, and halo, and more preferably from H, C₁₋₃ alkyl, and C₁₋₃ alkoxy and halo. Suitable single valent B¹ groups preferably have the formula -[C(R³)₂-C(R⁴)₂]ₓZ¹ or -[C(R³)=CR⁴]ₓZ¹, wherein each R³ and R⁴ are independently chosen from hydrogen, C₁₋₆ alkyl, and aryl; Z is chosen from hydrogen, C₁₋₆ alkyl, C₆₋₁₀ aryl, siloxaryl, - CO₂R⁵; each R⁵ is independently chosen from H, C₁₋₆ alkyl, C₁₋₆ hydroxyalkyl, C₆₋₁₀ aryl, C₆₋₁₀ hydroxyaryl, C₇₋₂₀ aralkyl, C₇₋₂₀ hydroxyaralkyl, and C₇₋₂₀ alkaryl; and x = 1 or 2. Preferably, R³ and R⁴ are independently chosen from H, C₁₋₃ alkyl, and aryl, and more preferably H and C₁₋₃ alkyl. It is preferred that R⁵ is H, C₁₋₃ alkyl, C₁₋₆ hydroxyalkyl, C₆₋₁₀ aryl, C₆₋₁₀ hydroxyaryl, and C₇₋₂₀ hydroxyaralkyl. Z¹ is preferably siloxyl or -CO₂R⁵. Preferred siloxyl groups have the formula -[Si(R⁶)₂-O]ₚ-Si(R⁶)₂-, wherein each R⁶ is independently chosen from H, C₁₋₆ alkyl, aryl, aralkyl, and alkaryl; and p is an integer from 1 or more. It is preferred that R⁶ is chosen from C₁₋₃ alkyl, C₆₋₁₀ aryl, and C₇₋₂₀ aralkyl. Suitable aralkyl groups include benzyl, phenethyl and phenylpropyl. Preferably, B¹ comprises one or more carbon-carbon double bonds (ethylenic unsaturation).

Preferably, the arylcyclobutene polymers comprise as polymerized units one or more bis-benzocyclobutene monomers of formula (2): 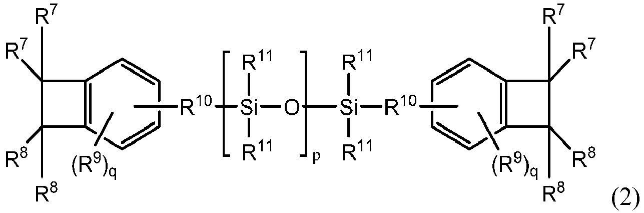 wherein each R⁷ and R⁸ is independently chosen from H, C₁₋₆ alkyl, C₁₋₆ alkenyl, C₁₋₆ alkoxy, halo, carboxy, C₂₋₆ carboxy-containing moiety, C₂₋₆ keto-containing moiety, C₁₋₆ amido-containing moiety, C₂₋₆ alkoxyalkanol, C₂₋₆ alkoxyester, -0-C₁₋₂₀ alkyl, -(C=O)-C₁-₂₀ alkyl, -O-(C=O)-C₁₋₂₀ alkyl, -(C=O)-O-C₁₋₂₀ alkyl, -O-C₆₋₂₀ aryl, -C(O)-C₆₋₂₀ aryl, -O-C(O)-C₆₋₂₀ aryl, and -C(O)-O-C₆₋₂₀ aryl, and preferably from H, C₁₋₃ alkyl, C₁₋₃ alkoxy and halo; wherein the two R⁷ moieties may be taken together along with the carbon to which they are attached to form a carbonyl or thiocarbonyl; and wherein the two R⁸ moieties may be taken together along with the carbon to which they are attached to form a carbonyl or thiocarbonyl; each R⁹ is independently chosen from C₁₋₆ alkyl, tri-C₁₋₆-alkylsilyl, C₁₋₆ alkoxy, and halo; each R¹⁰ is independently a divalent organic group which may be saturated or ethylenically unsaturated; each R¹¹ is independently chosen from H, C₁₋₆ alkyl, C₇₋₂₀ aralkyl and phenyl; p is an integer from 1 or more; and q is an integer from 0 to 3. Each R⁷ and R⁸ is preferably independently chosen from H, C₁₋₃ alkyl, and C₁₋₃ alkoxy, and more preferably each R⁷ and R⁸ are H. It is preferred that each R⁹ is independently chosen from C₁₋₆ alkyl, tri-C₁₋₃-alkylsilyl, C₁₋₃ alkoxy, and chloro, and more preferably from C₁₋₃ alkyl, tri-C₁₋₃-alkylsilyl, and C₁₋₃ alkoxy. Preferably, each R¹⁰ is independently chosen from a C₂₋₆ alkyl, C₂₋₆ alkenyl, and C₂₋₆ alkynyl, and more preferably each R¹⁰ is independently chosen from -CH₂CH₂-, -CH=CH-, and -C=C-. Each R¹¹ is preferably chosen from C₁₋₃ alkyl, and more preferably each R¹¹ is methyl. Preferably, p = 1-5, more preferably p = 1-3, and yet more preferably p = 1. It is preferred that q = 0. A particularly preferred arylcyclobutene monomer of formula (2) is 1,3-bis(2-bicyclo[4.2.0]octa-1,3,5-trien-3-yl-ethenyl)-1,1,3,3-tetramethyldisiloxane (DVS-bisBCB), which has the formula (3).

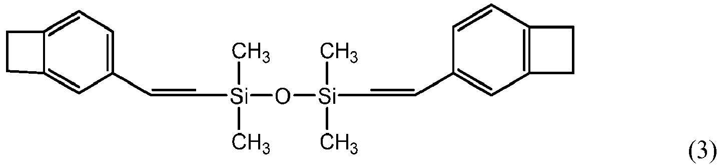

The present arylcyclobutene polymers preferably comprise as polymerized units one or more benzocyclobutene monomers of formula (4): 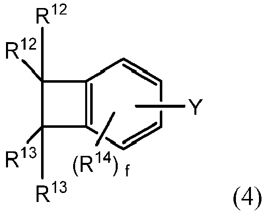 wherein each R¹² and R¹³ is independently chosen from H, C₁₋₆ alkyl, C₁₋₆ alkenyl, C₁₋₆ alkoxy, halo, carboxy, C₂₋₆ carboxy-containing moiety, C₂₋₆ keto-containing moiety, C₁₋₆ amido-containing moiety, C₂₋₆ alkoxyalkanol, C₂₋₆ alkoxyester, -O-C₁₋₂₀ alkyl, -(C=O)-C₁₋₂₀ alkyl, -O-(C=O)-C₁₋₂₀ alkyl, -(C=O)-O-C₁₋₂₀ alkyl, -O-C₆₋₂₀ aryl, -(C=O)-C₆₋₂₀ aryl, -O-(C=O)-C₆₋₂₀ aryl, and -(C=O)-O-C₆₋₂₀ aryl, and preferably from H, C₁₋₃ alkyl, and C₁₋₃ alkoxy; wherein the two R¹² moieties may be taken together along with the carbon to which they are attached to form a carbonyl or thiocarbonyl; and wherein the two R¹³ moieties may be taken together along with the carbon to which they are attached to form a carbonyl or thiocarbonyl; each R¹⁴ is independently chosen from C₁₋₆ alkyl, tri-C₁₋₆-alkylsilyl, C₁₋₆ alkoxy, and halo; Y is -SO₃R1⁵ or a monovalent radical having from 3 to 15 carbon atoms and having at least one -OH moiety or a protected carboxyl moiety; R¹⁵ is H or a monovalent radical having from 1 to 20 carbon atoms; and f is an integer of from 0 to 2. The term "C₁₋₆ amido-containing moiety" refers to any moiety having from 1 to 6 carbon atoms and having a -C(O)-NX2 moiety, where X may be H or a hydrocarbyl moiety. Each R¹² and R¹³ is preferably independently chosen from H, C₁₋₃ alkyl, C₁₋₃ alkoxy and halo, and more preferably each R¹² and R¹³ is H. Preferably, each R¹⁴ is independently chosen from C₁₋₆ alkyl, tri-C₁₋₃-alkylsilyl, C₁₋₃ alkoxy, and chloro, and more preferably from C₁₋₃ alkyl, tri-C₁₋₃-alkylsilyl, and C₁₋₃ alkoxy. The monovalent radical of Y may be aliphatic and/or aromatic. Typically, Y has from 1 to 5 -OH moieties, preferably from 1 to 3, more preferably 1 or 2, and yet more preferably 1 -OH moiety. Y may be a saturated or unsaturated monovalent radical having from 3 to 15 carbon atoms and having at least one-OH moiety, and is preferably ethylenically unsaturated. More preferably, the at least one-OH moiety of Y is -CO₂H or -SO₃H. It is preferred that R¹⁵ is H, a C₁₋₁₀ alkyl, C₇₋₁₆ aralkyl, or C₆₋₁₂ aryl. Preferred compounds of formula (4) are those wherein Y is chosen from -CH=CHC(=O)OR¹⁶; -CH=CH-CH₂OH; -CH₂-CH=CHC₆H₄OH; and - CH=CHCH₂C₆H₄OH; wherein R¹⁶ is chosen from H, C₂₋₈ hydroxyalkyl, and C₄₋₈ alkyl having one or more quaternary carbons directly bonded to the oxygen of the carboxyl moiety. More preferred are compounds of formula (4) are those wherein Y is-CH=CHC(=O)OR¹⁶, and yet more preferably -CH=CHC(=O)OH. It is preferred that f = 0.

The polymers of the invention may comprise as polymerized units one arylcyclobutene first monomer, or a mixture of two or more distinct arylcyclobutene first monomers. Preferably, the present polymers comprise two distinct arylcyclobutene monomers. When two distinct arylcyclobutene monomers are used, the mole ratio of the first distinct arylcyclobutene monomer to the second distinct arylcyclobutene monomer is from 1:99 to 99:1, preferably from 5:95 to 95:5, and more preferably from 25:75 to 75:25. It is further preferred that present polymers comprise as polymerized units one or more arylcyclobutene monomers comprising one or more moieties chosen from carboxylic acid, protected carboxylic acid and sulfonic acid. It is also preferred that the present polymers comprise as polymerized units one or more arylcyclobutene monomers of formula (2) described above. Even more preferably, the present polymers comprise as polymerized units one or more arylcyclobutene monomers of formula (2) described above and one or more arylcyclobutene monomers comprising one or more moieties chosen from carboxylic acid, protected carboxylic acid and sulfonic acid.

Any monomer having two or more allyl moieties and that is free of arylcyclobutene moieties, and which copolymerizes with the one or more arylcyclobutene first monomers to form the present arylcyclobutene polymers may suitably be used as the second monomer in the present invention, provided that one or more second monomers are not allyl-substituted bismaleimide derivatives. Compounds useful as second monomers may be monomeric or oligomeric. The second monomers have two or more allyl moieties, and may have from 2 to 20 allyl moieties. Preferably, the second monomers have from 2 to 10, more preferably from 2 to 6, and yet more preferably from 2 to 4 allyl moieties. Suitable allyl moieties are chosen from allyl ether moieties, allyl ester moieties, allyl amine moieties, allyl amide moieties, allyl ketone moieties, and allylaryl moieties, and preferably allyl ether moieties, allyl ester moieties, and allylaryl moieties. In one preferred embodiment, the second monomer is preferably free of carboxylic acid, protected carboxylic acid and sulfonic acid moieties.

Preferably, the one or more second monomers are chosen from compounds of formula (5): 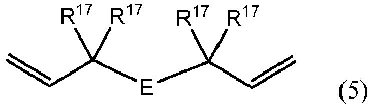 wherein each R¹⁷ is independently chosen from H and C₁₋₃₀ monovalent hydrocarbyl residue; E is chosen from O, S, S-S, N(R¹⁸), C(O), -O-C(O)-O-, -N(R¹⁸)-C(O)-, -N(R¹⁸)-C(O)-N(R¹⁸)-, S(O)₂, C₆₋₂₀ aryl, substituted C₆₋₂₀ aryl, and -O-G¹-O-; each R¹⁸ is independently chosen from H, C₁₋₁₂ alkyl, C₂₋₁₂ alkenyl, C₆₋₁₀ aryl, and substituted C₆₋₁₀ aryl; G¹ is an n+1 valent organic residue; and n is an integer from 1 to 5. Preferably, n = 1 to 3, and more preferably n = 1 or 2. It is preferred that each R¹⁷ is independently chosen from H, C₁₋₃₀ alkyl, substituted C₁₋₃₀ alkyl, C₂₋₃₀ alkenyl, substituted C₂₋₃₀ alkenyl, C₂₋₃₀ alkynyl, substituted C₂₋₃₀ alkynyl, C₅₋₃₀ aryl, and substituted C₅₋₃₀ aryl, more preferably from H, C₁₋₂₀ alkyl, substituted C₁₋₂₀ alkyl, C₂₋₂₀ alkenyl, substituted C₂₋₂₀ alkenyl, C₆₋₂₀ aryl, and substituted C₆₋₂₀ aryl, and even more preferably each R¹⁷ is H. Preferably, E is chosen from O, S, N(R¹⁸), C(O), -O-C(O)-O-, -N(R¹⁸)-C(O)-N(R¹⁸)-, S(O)₂, C₆₋₂₀ aryl, substituted C₆₋₂₀ aryl, and -O-G¹-O-, and more preferably from O, C(O), -O-C(O)-O-, C₆₋₂₀ aryl, substituted C₆₋₂₀ aryl, and -O-G¹-O-. It is preferred that each R¹⁸ is independently chosen from H, C₁₋₁₀ alkyl, C₂₋₁₀ alkenyl, C₆₋₁₀ aryl, and substituted C₆₋₁₀ aryl.

In formula (5), G¹ is preferably an n+1 valent organic residue having from 1 to 100 carbon atoms, more preferably from 1 to 80, yet more preferably from 1 to 60, and even more preferably from 1 to 50 carbon atoms. The organic residue of G¹ may contain one or more heteroatoms chosen from oxygen, nitrogen and sulfur, preferably oxygen and nitrogen, and more preferably oxygen. The organic residue of G¹ may further contain one or more moieties chosen from hydroxyl, primary-, secondary- or tertiary-amino, keto, ester, ether, sulfide, disulfide, and sulfonyl. More preferably G¹ is chosen from -C(O)-R¹⁹-C(O)-, C₁₋₂₀ alkyl, substituted C₁₋₂₀ alkyl, C₂₋₂₀ alkenyl, substituted C₂₋₂₀ alkenyl, C₂₋₂₀ alkynyl, substituted C₂₋₂₀ alkynyl, (C₂₋₈ alkyleneoxy)y1, C₆₋₃₀ aryl, substituted C₆₋₃₀ aryl, and -Ar¹-G²-Ar²-; wherein R¹⁹ is chosen from a chemical bond, C₁₋₂₀ alkyl, substituted C₁₋₂₀ alkyl, C₂₋₂₀ alkenyl, substituted C₂₋₂₀ alkenyl, C₂₋₂₀ alkynyl, substituted C₂₋₂₀ alkynyl, C₆₋₂₀ aryl, and substituted C₆₋₂₀ aryl; y1 is an integer from 1 to 100; Ar¹ and Ar² are independently C₆₋₂₀ aryl or substituted C₆₋₂₀ aryl; G² is chosen from a chemical bond, C(O), S(O)₂, C₁₋₂₀ alkyl, substituted C₁₋₂₀ alkyl, and -(CR²⁰R²¹-Ar³)_{y2}CR²⁰R²¹-; each of R²⁰ and R²¹ are independently chosen from H, OH, C₁₋₁₀ alkyl, C₁₋₁₀ alkoxy, and C₆₋₂₀ aryl; each Ar³ is independently chosen from C₆₋₂₀ aryl and substituted C₆₋₂₀ aryl; and y2 is an integer from 1 to 50. G¹ is more preferably chosen from -C(O)-R¹⁹-C(O)-, C₁₋₂₀ alkyl, substituted C₁₋₂₀ alkyl, C₂₋₂₀ alkenyl, (C₂₋₈ alkyleneoxy)y1, C₆₋₃₀ aryl, substituted C₆₋₃₀ aryl, and -Ar¹-G²-Ar²-; and yet more preferably from -C(O)-R¹⁹-C(O)-, C₁₋₂₀ alkyl, substituted C₁₋₂₀ alkyl, (C₂₋₄ alkyleneoxy)y1, C₆₋₃₀ aryl, substituted C₆₋₃₀ aryl, and -Ar¹-G²-Ar²-. It is preferred that R¹⁹ is chosen from C₁₋₂₀ alkyl, substituted C₁₋₂₀ alkyl, C₂₋₂₀ alkenyl, substituted C₂₋₂₀ alkenyl, C₂₋₂₀ alkynyl, substituted C₂₋₂₀ alkynyl, C₆₋₂₀ aryl, and substituted C₆₋₂₀ aryl, and more preferably from C₁₋₂₀ alkyl, substituted C₁₋₂₀ alkyl, C₂₋₂₀ alkenyl, substituted C₂₋₂₀ alkenyl, C₆₋₂₀ aryl, and substituted C₆₋₂₀ aryl. Preferably, y1 is an integer from 1 to 75, and more preferably 1 to 50. It is preferred that y2 is an integer from 1 to 30. It is preferred that Ar¹ and Ar² are independently chosen from phenyl, substituted phenyl, naphthyl, and substituted naphthyl. G² is preferably chosen from a chemical bond, C(O), S(O)₂, C₁₋₁₅ alkyl, halo C₁₋₁₅ alkyl, and (CR²⁰R²¹-Ar³)y₂CR²⁰R²¹. It is preferred that each of R²⁰ and R²¹ are independently chosen from H, C₁₋₁₀ alkyl, and C₆₋₂₀ aryl. Each Ar³ is independently chosen from phenyl, substituted phenyl, naphthyl, and substituted naphthyl.

Preferred monomers of formula (5) are those wherein E is chosen from O, N(R¹⁸), C(O), -O-C(O)-O-, -N(R¹⁸)-C(O)-N(R¹⁸)-, C₆₋₂₀ aryl, substituted C₆₋₂₀ aryl, and -O-G¹-O-, as well as monomers of formulae (6)-(8): 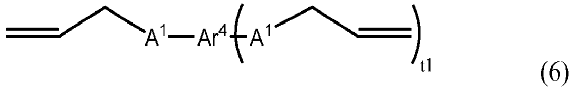 wherein each A¹ is independently chosen from a chemical bond, -CH₂-, O, and -C(O)O-; Ar⁴ is chosen from C₆₋₁₀ aryl and substituted C₆₋₁₀ aryl; and t1 = 1 to 2; 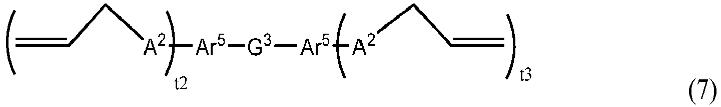 wherein each A² is independently chosen from a chemical bond, -CH₂-, O, and -C(O)O-; each Ar⁵ is chosen from C₆₋₁₀ aryl and substituted C₆₋₁₀ aryl; G³ is chosen from a chemical bond, O, S, S(O)₂, C(O), C₁₋₁₀ alkyl, halo substituted C₁₋₁₀ alkyl, and (CR²²R²³-Ar⁵)y₃CR²²R²³; each of R²² and R²³ are independently chosen from H, C₁₋₁₀ alkyl, and C₆₋₂₀ aryl; Ar⁵ is independently chosen from C₆₋₂₀ aryl and substituted C₆₋₂₀ aryl; y3 is an integer from 1 to 50; t2 = 1 to 2; and t3 = 1 to 2; 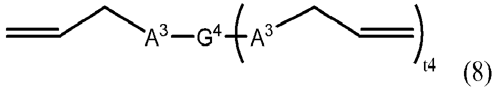 wherein each A³ is independently chosen from a chemical bond, -CH₂-, O, and -C(O)O-;G⁴ is C₁₋₂₀ alkyl, hydroxy C₁₋₂₀ alkyl, C₂₋₂₀ alkenyl, (C₂₋₆ alkyleneoxy)_{y4}, C₆₋₂₀ aryl-substituted C₁₋₂₀ alkyl, and heteroatom-containing C₂₋₂₀ alkenyl; y4 is an integer of 1 to 50; and t4 = 1 to 3; wherein R¹⁶ and G¹ are as described above. Ar⁴ is preferably phenyl, substituted phenyl, naphthyl, substituted naphthyl, and more preferably phenyl and naphthyl. Each Ar⁵ is preferably independently chosen from phenyl, substituted phenyl, naphthyl, substituted naphthyl, and more preferably phenyl and naphthyl. Preferably, G³ is chosen from a chemical bond, O, S(O)₂, C(O), -CH₂-, -C(CH₃)₂-, -C(CF₃)₂-, and (CR²²R²³-Ar⁵)y₃CR²²R²³. Preferably, each of R²² and R²³ are independently chosen from H, C₁₋₁₀ alkyl, phenyl, substituted phenyl, naphthyl, and substituted naphthyl. It is preferred that each Ar⁵ is independently chosen from phenyl, substituted phenyl, naphthyl, and substituted naphthyl. It is preferred that G⁴ is C₁₋₁₆ alkyl, hydroxy C₁₋₁₆ alkyl, C₂₋₁₆ alkenyl, (C₂₋₄ alkyleneoxy)y₄, C₆₋₂₀ aryl-substituted C₁₋₁₆ alkyl, and oxygen-containing C₂₋₁₆ alkenyl.

Exemplary second monomers of formula (5) include, but are not limited to: diallyl ether; diallyl sulfide; diallyl disulfide; diallylamine; triallylamine; diallylmethylamine; diallylethylamine; diallylpropylamine; N,N-diallylaniline; diallyl ketone; diallyl carbonate; N,N'-diallylurea; diallyl sulfone; *o-, m-,* and *p*-diallylbenzene; 1,3,5-triallylbenzene; diallyl anisole; diallylnaphthalene; 1,5-diallylnaphthalene-2,6-diol; diallyloxybiphenyl such as 4,4'-diallyloxybiphenyl and 2,2'-diallyloxybiphenyl; bisphenol A diallyl ether; bisphenol S diallyl ether; bisphenol F diallyl ether; bisphenol AF diallyl ether; diallyloxynaphthalene such as 1,2-diallyloxynaphthalene, 1,5-diallyloxynaphthalene, 1,8-diallyloxynaphthalene, 2,7-diallyloxynaphthalene and 2,3-diallyloxynaphthalene; diallyloxybinaphthalene; 1,3-diallyloxybenzene; 1,2-diallyloxybenzene; 1,4-diallyloxybenzene; 1,3,5-triallyloxybenzene; 1,2,3-triallyloxybenzene; 1,2,4-triallyloxybenzene; 1,3-diallyloxy-5-hydroxybenzene; trimethylolpropane diallyl ether; trimethylolpropane triallyl ether; pentaerythritol diallyl ether; pentaerythritol triallyl ether; pentaerythritol tetraallyl ether; 2,2-dimethylpropane-1-3-diallyl ether; ethyleneglycol diallyl ether; diethyleneglycol diallyl ether; propyleneglycol diallyl ether; dipropyleneglycol diallyl ether; tripropyleneglycol diallyl ether; 1,4-butanediallyl ether; diallyl phthalate; diallyl isophthalate; diallyl terephthalate; triallyl trimesate; diallyl oxalate; diallyl malonate; diallyl succinate; diallyl maleate; diallyl glutarate; diallyl adipate; diallyl hex-3-endicarboxylate; diallyl thiophenedicarboxylate; diallyl furandicarboxylate; diallyl bipyridinedicarboxylate; diallyl pyridinedicarboxylate; 2,5-bis((allyloxy)methyl)tetrahydrofuran; and 9,9-bis((allyloxy)methyl)fluorene.

Compound useful as second monomers in the present invention are generally commercially available or may be prepared by a variety of methods known in the art. For example, a carboxylic acid anhydride, such as phthalic anhydride or succinic anhydride, may be reacted with 2 equivalents of allyl magnesium bromide in a suitable solvent to afford the corresponding diallyl ester, such as diallyl phthalate and diallyl succinate, respectively.

The present arylcyclobutene polymers may optionally further comprise as polymerized units one or more third monomers comprising one or more diene or dienophilic moieties. Such third monomers are different from the first and second monomers. Third monomers comprising one dienophilic moiety may be used to cap a growing arylcyclobutene polymer chain, effectively reducing the molecular weight relative to an arylcyclobutene polymer prepared in the absence of such third monomer. Third monomers comprising two or more dienophilic moieties may be used to impart other characteristics into the arylcyclobutene polymer. The selection of such third monomers is within the ability of those skilled in the art.

The ratio of the total moles of arylcyclobutene first monomers to the total moles of second monomers used to form the present polymers may vary from 99:1 to 1:99, preferably from 99:1 to 50:50, and more preferably from 90:10 to 60:40. The optional third monomers may be used in an amount of from 0 to 40 mol%, preferably from 0 to 30 mol%, and more preferably from 1 to 15 mol%, based on the total moles of monomers used to form the present arylcyclobutene polymers. Typically, the present arylcyclobutene polymers have a weight average molecular weight (M_{w}) of from 1000 to 50,000 AMU, and preferably from 1500 to 35,000 AMU, and more preferably 2,500 to 25,000.

Arylcyclobutene polymers of the invention may be prepared by any suitable means, such as those described in U.S. Pat. Nos. 4,812,588; 5,136,069; 5,138,081; and Int. Pat. App. No. WO 94/25903. In general, the present polymers are prepared by heating one or more of the present arylcyclobutene first monomers and one or more second monomers, and any optional third monomers, typically in a suitable solvent, to the polymerization initiation temperature of the particular monomer(s) used. While not wishing to be bound by theory, it is believed that these monomers polymerize by a Diels-Alder cycloaddition, so no catalyst initiator or curing agents are necessary for the polymerization to occur. Typically, polymerization of these monomers is initiated at a temperature of ≥ 150 °C, and preferably ≥ 170 °C, although lower or higher temperatures may be used depending upon the particular monomer(s) selected. The temperature at which the present monomers undergo polymerization is affected by any substituent on the cyclobutene ring. In general, when the cyclobutene ring is unsubstituted, the polymerization is initiated at ≥ 170 °C. Electron-donating or electron-withdrawing substituents on the cyclobutene ring generally lower the polymerization initiation temperature. Suitable polymerization solvents are any organic solvents which dissolve the one or more monomers and have boiling points above the polymerization temperature of the monomers. Exemplary organic solvents include polar aprotic solvents such as amides and sulfones. Polymerization time is typically from 1 to 60 hours. For certain applications, it may be desired to stop the polymerization at the oligomer stage. Such oligomers composed of one or more monomers of the invention may be composed predominantly of dimers, trimmers, tetramers, and the like, and may then be subsequently further polymerized. As used herein, the terms "monomers of the invention" and "present monomers" are intended to include the individual compounds described herein, as well as dimers, trimmers and tetramers thereof which are then to be further polymerized. The present polymers may be used as is or may be isolated by adding a nonsolvent, such as water or methanol, to precipitate the polymer from the solution and thereafter removing the organic solvent.

Compositions of the present polymers typically comprise one or more arylcyclobutene polymers of the invention and one or more organic solvents. Suitable organic solvents are those in which the present polymers are soluble. Particularly useful organic solvents are any solvents useful in the manufacture or formulation of arylcyclobutene polymers. Exemplary organic solvents include, without limitation: aromatic hydrocarbons such as toluene, xylene, and mesitylene; alcohols such as 2-methyl-1-butanol, 4-methyl-2-pentanol, and methyl isobutyl carbinol; esters such as ethyl lactate, propylene glycol methyl ether acetate, methyl 2-hydroxyisobutyrate, methyl 3-methoxypropionate and 3-methoxy-1-butyl acetate; lactones such as gamma-butyrolactone; lactams such as N-methylpyrrolidinone; ethers such as propylene glycol methyl ether and dipropylene glycol dimethyl ether isomers (commercially available from The Dow Chemical Company as PROGLYDE™ DMM); ketones such as cyclohexanone and methylcyclohexanone; and mixtures thereof.

Suitable optional additives useful in the present compositions include, without limitation, one or more of each of curing agents, surfactants, crosslinkers different from the present monomers, inorganic fillers, organic fillers, plasticizers, adhesion promoters, metal passivating materials, and the like, and combinations of any of the foregoing. Suitable surfactants are well-known to those skilled in the art, and nonionic surfactants are preferred. Such surfactants may be present in an amount of from 0 to 10 g/L, and preferably from 0 to 5 g/L. Any suitable inorganic fillers may optionally be used in the present compositions, and are well-known to those skilled in the art. Exemplary inorganic fillers include, but are not limited to, silica, silicon carbide, silicon nitride, alumina, aluminum carbide, aluminum nitride, boron nitride, zirconia, and the like, and mixtures thereof. The inorganic filler may be in the form of a powder, rods, spheres, or any other suitable shape. Such inorganic filler may have any suitable dimensions. Inorganic filler may be used in an amount of from 0 to 80 wt%, based on the total weight of the composition. Any crosslinking monomers that are different from the monomers of the invention may be used as crosslinkers, provided that they crosslink with the arylcyclobutene polymer in the composition under the conditions used to cure the composition. Suitable crosslinkers include, but are not limited to, polyamines, polythiols, epoxy resins, and (meth)acrylate-containing crosslinkers. The selection of such crosslinkers is within the ability of those skilled in the art. Such crosslinkers are typically used in an amount of from 0 to 20 wt%, and preferably 0 to 10 wt%, based on the total weight of the polymerizable components in the composition. One or more non-crosslinking monomers may also be added to the present compositions, and are typically present in an amount of from 0 to 20 wt%, based on the total weight of the polymerizable components in the composition. Such non-crosslinking monomers contain 1 or 2 polymerizable moieties capable of polymerizing with the benzocyclobutene-based components in the present compositions. Preferably, the metal passivating material is a copper passivating agent. Suitable copper passivating agents are well known in the art and include imidazoles and benzotriazoles.

A variety of curing agents may be used in the present compositions. Suitable curing agents may aid in the curing of the benzocyclobutene-based materials, and may be activated by heat or light. Exemplary curing agents include, but are not limited to, thermally generated initiators and photoactive compounds (photogenerated initiators). The selection of such curing agents is within the ability of those skilled in the art. Preferred thermal generated initiators are free radical initiators, such as, but not limited to, azobisisobutyronitrile, dibenzoyl peroxide, and dicumylperoxide. Preferred photoactive curing agents are free radical photoinitiators available from BASF under the Irgacure brand and diazonaphthoquinone (DNQ) compounds including sulfonate esters of a DNQ compound. Exemplary free radical photoinitiators are Iracure 379 (2-dimethylamino-2-(4-methyl-benzyl)-1-(4-morpholin-4-yl-phenyl)-butan-1-one) and Irgacure 907 (2-methyl-1-[4-(methylthio)phenyl]-2-(4-morpholinyl)-1-propanone). Suitable DNQ compounds are any compounds having a DNQ moiety, such as a DNQ sulfonate ester moiety, and that function as photoactive compounds in the present compositions, that is, they function as dissolution inhibitors upon exposure to appropriate radiation. Suitable DNQ compounds are disclosed in U.S. Pat. Nos. 7,198,878 and 8,143,360. The amount of photoactive compound varies from 0 to 30 wt%, based on the total weight of the arylcyclobutene polymers. When present, the photoactive component is typically used in an amount of 5 to 30 wt%, preferably from 5 to 25 wt%, and more preferably from 10 to 25 wt%, based on the total weight of the benzocyclobutene-based components.

Any suitable adhesion promoter may be used in the present compositions and the selection of such adhesion promoter is well within the ability of those skilled in the art. Preferred adhesion promoters are silane-containing materials, and more preferably trialkoxysilane-containing materials. Exemplary adhesion promoters include, but are not limited to: bis(trialkoxysilylalkyl)benzenes such as bis(trimethoxysilylethyl)benzene; aminoalkyl trialkoxy silanes such as aminopropyl trimethoxy silane, aminopropyl triethoxy silane, trimethoxysilylpropylmaleamic acid, triethoxysilylpropylmaleamic acid, and phenyl aminopropyl triethoxy silane; and other silane coupling agents, as well as mixtures of the foregoing. Particularly suitable adhesion promoters include AP 3000, AP 8000, and AP 9000S, available from Dow Electronic Materials (Marlborough, Massachusetts). The present crosslinkable compositions typically contain from 0 to 15 wt% of an adhesion promoter based on the total weight of the composition, preferably from 0.5 to 10 wt%, more preferably from 1 to 10 wt%, yet more preferably from 2 to 10 wt%.

The present compositions are prepared by combining one or more present polymers and any optional organic solvents or additional components in any order. When the present compositions contain a curing agent such as a photoactive compound, it is preferred that the curing agent is first dissolved in a suitable organic solvent, then combined with one or more present polymers and any optional surfactant, and then combined with any optional adhesion promoter.

Any of the present compositions are useful in forming a layer of an arylcyclobutene polymer having improved tensile strength and elongation on a substrate. Such arylcyclobutene polymer layers are suitable as dielectric layers, permanent bonding adhesives, as stress buffer layers, and the like. The present compositions may be coated on a substrate by any suitable method. Suitable methods for disposing the present compositions include, but are not limited to, spin-coating, curtain coating, spray coating, roller coating, dip coating, vapor deposition, and lamination such as vacuum lamination, among other methods. In the semiconductor manufacturing industry, spin-coating is a preferred method to take advantage of existing equipment and processes. In spin-coating, the solids content of the composition may be adjusted, along with the spin speed, to achieve a desired thickness of the composition on the surface it is applied to. Typically, the present compositions are spin-coated at a spin speed of 400 to 4000 rpm. The amount of the present compositions dispensed on the wafer or substrate depends on the total solids content in the composition, the desired thickness of the resulting layer, and other factors well-known to those skilled in the art. When a film or layer of the present compositions is cast, such as by spin-coating, much (or all) of the solvent evaporates during deposition of the film. Preferably, after being disposed on a surface, the composition is heated (baked) to remove any remaining solvent. Typical baking temperatures are from 90 to 160 °C, although other temperatures may be suitably used. Such baking to remove residual solvent is typically done for approximately 2 minutes, although longer or shorter times may suitably be used. The arylcyclobutene oligomers are typically cured by heating for a period of time. Suitable curing temperatures range from 180 to 250 °C or higher. Typically curing times range from 1 to 600 minutes.

In an alternate preferred method, the present compositions may be formed as a dry film and disposed on the surface of a substrate by lamination. A variety of suitable lamination techniques, including vacuum lamination techniques, may be used and are well known to those skilled in the art. In forming a dry film, the present compositions are first disposed, such as coated, onto a front surface of a suitable film support sheet such as a polyester sheet, preferably polyethyleneterephthalate (PET) sheet, or a polyimide sheet such as KAPTON™ polyimide, using slot-die coating, gravure printing, or another appropriate method. The composition is then soft baked at a suitable temperature, such as from 90 to 140 °C, for an appropriate time, such as from 1 to 30 minutes, to remove any solvent. A polymer film cover sheet such as polyethylene is then roll-laminated at room temperature onto the dried composition to protect the composition during storage and handling. To dispose the dried composition onto the substrate, the cover sheet is first removed. Then, the dried composition on the support sheet is laminated onto the substrate surface using roll-lamination or vacuum lamination. The lamination temperature can range from 20 to 120 °C. The support sheet is then removed (peeled), leaving the dried composition on that surface.

A wide variety of electronic device substrates may be employed in the present invention. An electronic device substrate is any substrate for use in the manufacture of any electronic device. Exemplary electronic device substrates include, without limitation, semiconductor wafers, glass, sapphire, silicate materials, silicon nitride materials, silicon carbide materials, display device substrates, epoxy mold compound wafers, circuit board substrates, and thermally stable polymers. As used herein, the term "semiconductor wafer" is intended to encompass a semiconductor substrate, a semiconductor device, and various packages for various levels of interconnection, including a single-chip wafer, multiple-chip wafer, packages for various levels, substrates for light emitting diodes (LEDs), or other assemblies requiring solder connections. Semiconductor wafers, such as silicon wafers, gallium-arsenide wafers, and silicon-germanium wafers, may be patterned or unpatterned. As used herein, the term "semiconductor substrate" includes any substrate having one or more semiconductor layers or structures which include active or operable portions of semiconductor devices. The term "semiconductor substrate" is defined to mean any construction comprising semiconductive material, such as a semiconductor device. A semiconductor device refers to a semiconductor substrate upon which at least one microelectronic device has been or is being fabricated. Thermally stable polymers include, without limitation, any polymer stable to the temperatures used to cure the arylcyclobutene material, such as polyimide (for example, KAPTON™ polyimide, available from DuPont, Wilmington, Delaware).

When compositions of the invention which do not contain an adhesion promoter are used, the surface of the substrate to be coated with the present compositions may optionally first be contacted with a suitable adhesion promoter or vapor treated. Such treatments improve the adhesion of the present arylcyclobutene polymers to the substrate surface. Any suitable method, such as spin-coating, dip coating, spray coating, curtain coating, roll coating, vapor deposition, and the like, may be used to contact the substrate surface with the adhesion promoter. Spin-coating is a preferred method for contacting the substrate surface with an adhesion promoter. Any suitable adhesion promoter may be used and the selection of such adhesion promoter is well within the ability of those skilled in the art. Preferred adhesion promoters are silane-containing materials, and more preferably trialkoxysilane-containing materials. Exemplary adhesion promoters useful to pre-treat the substrate surface are those described above. Various vapor treatments known in the art may be used to increase the adhesion of the arylcyclobutene polymers of the present invention to the substrate surface, such as plasma treatments. In certain applications, it may be preferred to use an adhesion promoter to treat the substrate surface prior to coating the surface with the present compositions.

The present arylcyclobutene-based polymers are useful in forming arylcyclobutene-based coatings that have improved tensile strength, elongation and/or reduced residual stress as compared to coatings prepared from conventional benzocyclobutene-based polymers.
Example 1: In a nitrogen purged reaction vessel, a mixture of benzocyclobutene acrylic acid (BCB-AA, 14.63 g, 84.00 mmol), DVS-bisBCB (12.66 g, 32.40 mmol) as first monomers and diallylphthalate (0.887 g, 3.60 mmol) as the second monomer in 3-methoxybutylacetate (41 g) was heated to 175 °C for 24 hours. The temperature was then lowered to 165 °C and continued to react with monitoring for molecular weight build by periodically removing a small sample and measuring the M_{w} of the resulting polymer by gel permeation chromatography using polystyrene standards. When the observed M_{w} was 4800 - 6500 AMUs, the reactor was cooled to 80 °C and the mixture was filtered hot through a 1 µm polypropylene filter to provide Polymer 1.
Example 2: The procedure of Example 1 was repeated except that the amounts of monomers were as follows: BCB-AA (14.63 g, 84.00 mmol), DVS-bisBCB (11.25 g, 28.80 mmol) as first monomers and diallylphthalate (1.773 g, 7.20 mmol) as the second monomer in 3-methoxybutylacetate (41 g) were B-staged as before to provide Polymer 2.
Example 3: The procedure of Example 1 was repeated except that the amounts of monomers were as follows: BCB-AA (14.63 g, 84.00 mmol), DVS-bisBCB (9.845 g, 25.20 mmol) as first monomers and diallylphthalate (2.660 g, 10.80 mmol) as the second monomer in 3-methoxybutylacetate (41 g) were B-staged as before to provide Polymer 3.
Example 4: The procedure of Example 1 was repeated except that the amounts of monomers were as follows: BCB-AA (17.68 g, 101.5 mmol), DVS-bisBCB (15.29 g, 39.15 mmol) as first monomers and diallylisophthalate (1.07 g, 4.35 mmol) as the second monomer in 3-methoxybutylacetate (50 g) were B-staged as before to provide Polymer 4.
Example 5: The procedure of Example 1 was repeated except that the amounts of monomers were as follows: BCB-AA (18.29 g, 105 mmol), DVS-bisBCB (14.06 g, 36 mmol) as first monomers and diallylisophthalate (2.22 g, 9.00 mmol) as the second monomer in 3-methoxybutylacetate (51 g) were B-staged as before to provide Polymer 5.
Example 6: The procedure of Example 1 was repeated except that the amounts of monomers were as follows: BCB-AA (18.29 g, 105 mmol), DVS-bisBCB (12.31 g, 31.5 mmol) as first monomers and diallylisophthalate (3.32 g, 13.5 mmol) as the second monomer in 3-methoxybutylacetate (50 g) were B-staged as before to provide Polymer 6.
Example 7: The procedure of Example 1 was repeated except that the amounts of monomers were as follows: BCB-AA (18.29 g, 105 mmol), DVS-bisBCB (15.82 g, 40.5 mmol) as first monomers and 4,4'-bis-A-diphenol-diallylether (1.388 g, 4.50 mmol) as the second monomer in 3-methoxybutylacetate (51 g) were B-staged as before to provide Polymer 7.
Example 8: The procedure of Example 1 was repeated except that the amounts of monomers were as follows: BCB-AA (18.29 g, 105 mmol), DVS-bisBCB (14.06 g, 36.0 mmol) as first monomers and 4,4'-bis-A-diphenol-diallylether (2.776 g, 9.00 mmol) as the second monomer in 3-methoxybutylacetate (50 g) were B-staged as before to provide Polymer 8.
Example 9: The procedure of Example 1 was repeated except that the amounts of monomers were as follows: BCB-AA (18.9 g, 108.5 mmol), DVS-bisBCB (12.72 g, 32.55 mmol) as first monomers and 4,4'-bis-A-diphenol-diallylether (4.302 g, 13.95 mmol) as the second monomer in 3-methoxybutylacetate (52 g) were B-staged as before to provide Polymer 9.
Example 10: The procedure of Example 1 was repeated except that the amounts of monomers were as follows: BCB-AA (12.72 g, 73.0 mmol), DVS-bisBCB (10.19 g, 26.1 mmol) as first monomers and trimethylolpropane diallyl ether (1.08 g, 5.04 mmol) as the second monomer in Proglyde DMM (36.6 g) were B-staged as before to provide Polymer 10.
Example 11: The procedure of Example 1 was repeated except that the amounts of monomers were as follows: BCB-AA (13.2 g, 75.8 mmol), DVS-bisBCB (8.54 g, 21.8 mmol) as first monomers and trimethylolpropane diallyl ether (2.37 g, 11.0 mmol) as the second monomer in Proglyde DMM (36.0 g) were B-staged as before to provide Polymer 11.
Example 12: The procedure of Example 1 was repeated except that the amounts of monomers were as follows: BCB-AA (13.8 g, 79 mmol), DVS-bisBCB (6.76 g, 17.3 mmol) as first monomers and trimethylolpropane diallyl ether (3.76 g, 17.5 mmol) as the second monomer in Proglyde DMM (40 g) were B-staged as before to provide Polymer 12.
Example 13: The procedure of Example 1 was repeated except that the amounts of monomers were as follows: BCB-AA (14.4 g, 82.7 mmol), DVS-bisBCB (4.63 g, 11.6 mmol) as first monomers and trimethylolpropane diallyl ether (5.2 g, 24.4 mmol) as the second monomer in Proglyde DMM (37 g) were B-staged as before to provide Polymer 13.
Example 14: The procedure of Example 1 was repeated except that the amounts of monomers were as follows: BCB-AA (12.6 g, 72.6 mmol), DVS-bisBCB (10.2 g, 26.1 mmol) as first monomers and pentaerythritol triallyl ether (1.36 g, 5.3 mmol) as the second monomer in Proglyde DMM (36 g) were B-staged as before to provide Polymer 14.
Example 15: The procedure of Example 1 was repeated except that the amounts of monomers were as follows: BCB-AA (13.0 g, 74.9 mmol), DVS-bisBCB (8.35 g, 21.4 mmol) as first monomers and pentaerythritol triallyl ether (2.80 g, 10.9 mmol) as the second monomer in Proglyde DMM (37 g) were B-staged as before to provide Polymer 15.
Example 16: The procedure of Example 1 was repeated except that the amounts of monomers were as follows: BCB-AA (13.5 g, 77.5 mmol), DVS-bisBCB (6.47 g, 16.6 mmol) as first monomers and pentaerythritol triallyl ether (4.33 g, 16.9 mmol) as the second monomer in Proglyde DMM (32 g) were B-staged as before to provide Polymer 16.
Example 17: The procedure of Example 1 was repeated except that the amounts of monomers were as follows: BCB-AA (13.3 g, 76.3 mmol), DVS-bisBCB (4.54 g, 11.6 mmol) as first monomers and pentaerythritol triallyl ether (5.71 g, 22.3 mmol) as the second monomer in Proglyde DMM (36 g) were B-staged as before to provide Polymer 17.
Example 18: The procedure of Example 1 is repeated except that the amounts of the monomers are varied and the second monomer is varied as shown in Table 1 and is expected to provide the polymers indicated in Table 1.

**Table 1**

| **Second Monomer** | **BCB-AA / DVS-bisBCB / Second Monomer Mole Ratio** | **Sample** |
|---|---|---|
| Trimethylolpropane triallyl ether | 2/4/1 | Polymer 18 |
| Pentrerythritol tetraallyl ether | 1/2/1 | Polymer 19 |
| Triallylamine | 2/4/1 | Polymer 20 |
| Diallyl ketone | 2/4/1 | Polymer 21 |
| Bisphenol AF diallyl ether | 2/3.5/1.5 | Polymer 22 |
| Bisphenol S Diallyl ether | 2/3.5/1.5 | Polymer 23 |
| 1,3-Diallyloxybenzene | 1/1.5/1 | Polymer 24 |
| Diallyl maleate | 1/3/1.5 | Polymer 25 |
| Diallyl succinate | 1/2/1 | Polymer 26 |
| Bisphenol F diallyl ether | 1/3/1.5 | Polymer 27 |
| Diallyl furan-2,5-dicarboxylate | 2/4/1.5 | Polymer 28 |

Example 19: A coating composition was prepared by dissolving 3.216 g of diazonaphthoquinone (DNQ) photoactive compound (PAC) in 2.930 g propylene glycol methyl ether acetate (PGMEA), 1.604 g of 3-methoxybutylacetate, 1.755 g of anisole, and 0.62 g of DCT L-7604 surfactant in PGMEA solvent in a bottle. The PAC is a 2,1,5-DNQ sulfonic ester of 4,4'-((2-hydroxyphenyl)methylene)bis(2,3,6-trimethylphenol) with an average of 65 mole% of esterified phenols. Next, 4.679 g of a 50 wt% solution N-540 epoxy cross-linker solution in PGMEA was added along with 12.504 g of Polymer 1 from Example 1 (41 wt% in 3-methoxybutylacetate) and 0.288 g of triethoxysilylpropylmaleamic acid (50 wt% in PGMEA) as an adhesion promoter. The bottle was rolled for 12 hours to form a homogeneous solution. After de-foaming, the solution was filtered through a 0.45µm nylon filter before use to provide Coating Composition 1.
Example 20: The procedure of Example 19 was repeated using Polymers 2 and 3 from Examples 2 and 3, respectively, to provide Coating Compositions 2 and 3, respectively.
Comparative Example 1: The procedure of Example 19 was repeated except that Polymer 1 was replaced with Comparative Polymer 1 to provide Comparative Coating Composition 1. Comparative Polymer 1 is a commercially available arylcyclobutene polymer composed of as polymerized units only BCB-AA and DVS-bis-BCB in a mole ratio of 70:30.
Example 21: Each of the Coating Compositions 1 to 3, and Comparative Coating Composition 1 were sputtered on a 200 mm prime grade Copper coated silicon wafer using a Site Trac TT5-XP coater at 1735 rpm for 30 seconds followed by a soft bake of 90 °C for 90 seconds to further remove solvent. The film thickness of each coating was approximately 5.5 µm. The coated wafers were then hard cured in a Blue M Ultra-Temp oven (Model IGF-6680F-4) under nitrogen at 250 °C for 60 minutes. The final film thickness of each coating was approximately 5 µm, and wafers were cleaved into 10 mm by 90 mm samples. The wafer samples were subjected to a 10% solution of ammonium persulfate in order to lift the polymer films off wafer samples. The films were carefully rinsed with water and allowed to fully dry. Once dried, the samples were mounted using transparent tape on an elongation template with a 25.4 mm gauge length. Elongation measurements were taken on an Instron 33R4464 Model instrument using a crosshead speed of 5 mm/sec and Instron Bluehill2 software. Tensile strength values were calculated by dividing the load at break by the original minimum cross-sectional area. The average tensile strength and % elongation of each sample is reported in Table 2 along with the difference in tensile strength and % elongation between the samples of the invention and the comparative sample. As can be seen from these results, the films formed from the arylcyclobutene polymers of the invention have improved elongation and tensile strength as compared to films formed from conventional arylcyclobutene polymers.

**Table 2**

| Coating Composition | Average Tensile Strength | Δ Tensile Strength MPa | % Elongation | Δ % Elongation |
|---|---|---|---|---|
| Comparative | 110.25 | | 13.49 | |
| 1 | 114.14 | 3.89 | 18.07 | 4.58 |
| 2 | 121.6 | 11.35 | 23.12 | 9.63 |
| 3 | 120.36 | 10.11 | 20.75 | 7.26 |

## Claims

1. A polymer comprising as polymerized units one or more arylcyclobutene first monomers and one or more second monomers having two or more allyl moieties; wherein the one or more second monomers are free of arylcyclobutene moieties; and wherein the one or more second monomers are not allyl-substituted bismaleimide derivatives.

2. The polymer of claim 1 wherein the one or more arylcyclobutene first monomers further comprises one or more moieties chosen from carboxylic acid, protected carboxylic acid and sulfonic acid.

3. The polymer of claim 1 further comprising two distinct arylcyclobutene first monomers.

4. The polymer of claim 1 wherein the allyl moieties are chosen from allyl ether moieties, allyl ester moieties, allyl amine moieties, allyl amide moieties, allyl ketone moieties, and allylaryl moieties.

5. The polymer of claim 1 further comprising as polymerized units one or more third monomers comprising one or more diene or dienophilic moieties.

6. The polymer of claim 1 wherein the one or more arylcyclobutene first monomers have the formula: 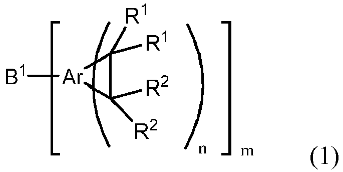 wherein B¹ is an n-valent linking group; Ar is a polyvalent aryl group and the carbon atoms of the cyclobutene ring are bonded to adjacent carbon atoms on the same aromatic ring of Ar; m is an integer of 1 or more; n is an integer of 1 or more; each of R⁵ and R² is independently a monovalent group; wherein the two R¹ moieties may be taken together along with the carbon to which they are attached to form a carbonyl or thiocarbonyl; and wherein the two R² moieties may be taken together along with the carbon to which they are attached to form a carbonyl or thiocarbonyl.

7. The polymer of claim 1 wherein the one or more second monomers are chosen from compounds of formula (5): 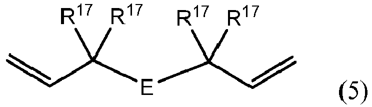 wherein each R¹⁷ is independently chosen from H and C₁₋₃₀ monovalent hydrocarbyl residue; E is chosen from O, S, S-S, N(R¹⁸), C(O), -O-C(O)-O-, -N(R¹⁸)-C(O)-, -N(R¹⁸)-C(O)-N(R¹⁸)-, S(O)₂, C₆₋₂₀ aryl, substituted C₆₋₂₀ aryl, and -O-G¹-O-; each R¹⁸ is independently chosen from H, C₁₋₁₂ alkyl, C₂₋₁₂ alkenyl, C₆₋₁₀ aryl, and substituted C₆₋₁₀ aryl; G¹ is an n+1 valent organic residue; and n is an integer from 1 to 5.

8. The polymer of claim 7 wherein n = 1 to 2.

9. The polymer of claim 7 wherein each R¹⁷ = H.

10. The polymer of claim 7 wherein G¹ is an n+1 valent organic residue having from 1 to 100 carbon atoms.

11. The polymer of claim 7 wherein G¹ is chosen from -C(O)-R¹⁹-C(O)-, C₁₋₂₀ alkyl, substituted C₁₋₂₀ alkyl, C₂₋₂₀ alkenyl, substituted C₂₋₂₀ alkenyl, C₂₋₂₀ alkynyl, substituted C₂-₂₀ alkynyl, (C₂₋₈ alkyleneoxy)y1, C₆₋₃₀ aryl, substituted C₆₋₃₀ aryl, and -Ar¹-G²-Ar²-; wherein R¹⁹ is chosen from a chemical bond, C₁₋₂₀ alkyl, substituted C₁₋₂₀ alkyl, C₂₋₂₀ alkenyl, substituted C₂₋₂₀ alkenyl, C₂₋₂₀ alkynyl, substituted C₂₋₂₀ alkynyl, C₆₋₂₀ aryl, and substituted C₆₋₂₀ aryl; y1 is an integer from 1 to 100; Ar¹ and Ar² are independently C₆₋₂₀ aryl or substituted C₆₋₂₀ aryl; G² is chosen from a chemical bond, C(O), S(O)₂, C₁₋₂₀ alkyl, substituted C₁₋₂₀ alkyl, and -(CR²⁰R²¹-Ar³)y₂CR²⁰R²¹-; each of R²⁰ and R²¹ are independently chosen from H, OH, C₁₋₁₀ alkyl, C₁₋₁₀ alkoxy, and C₆₋₂₀ aryl; each Ar³ is independently chosen from C₆₋₂₀ aryl and substituted C₆₋₂₀ aryl; and y2 is an integer from 1 to 50.

12. A composition comprising the polymer of claim 1 and one or more organic solvents.

13. The composition of claim 12 further comprising one or more photoactive compounds.

14. A method of forming a film on a substrate comprising: providing a substrate; coating a layer of a composition of claim 12 on a surface of the substrate; optionally drying the coating; and curing the coating.
